# EUROPEAN PATENT APPLICATION

(11) **EP 2 696 542 A1**
(43) Date of publication of application: **12.02.2014**
(21) Application number: 13176543.0
(22) Date of filing: 15.07.2013
(51) Int. Cl.: H04L 12/707, H04L 12/703, H04L 12/775, H04L 12/721

(54) **Method, ToR switch, and system for implementing protection switchover based on TRILL network**

(30) Priority: 09.08.2012 CN 201210282418
(71) Applicant: Huawei Technologies Co., Ltd., Longgang District, Shenzhen Guangdong 518129 (CN)
(72) Inventor: Liao, Wenqi, 518129 Shenzhen (CN)
(74) Representative: Maiwald Patentanwalts GmbH

(57) **Abstract**

Embodiments of the present invention disclose a method for implementing a protection switchover based on a TRILL network. A top of rack, ToR, switch acquires protection group information, where the protection group information includes first link information of a connection between the ToR switch and a first center of rack, COR, switch and second link information of a connection between the ToR switch and a second COR switch; the ToR switch establishes a first link with the first COR switch according to the first link information and establishes a second link with the second COR switch according to the second link information; and the ToR switch switches a service carried over the first link to the second link when the first link is a master link and if the first link is faulty. The embodiments of the present invention are mainly applied to a protection switchover process.

## Description

### TECHNICAL FIELD

The present invention relates to the field of communications technologies, and in particular, to a method, a top of rack (Top Of Rack in English, TOR for short) switch, and a system for implementing a protection switchover based on a transparent interconnection of lots of links (Transparent Interconnection of Lots of Links in English, TRILL for short) network.

### BACKGROUND

A switch on a TRILL network has both a layer 2 forwarding function and a layer 3 routing function and is usually called a routing bridge (Routing Bridge in English, RB for short). The TRILL runs on a data link layer (Data Link Layer in English), that is, layer 2 in an open system interconnection (Open System Interconnection in English, OSI for short) reference model. A link state routing technology is used on the data link layer, and the working of an upper-layer router is not interfered.

On the TRILL network, an RB runs the intermediate system to intermediate system routing protocol (Intermediate System to Intermediate System Routing Protocol in English, IS-IS for short) and broadcasts link information to all RBs. Therefore, each RB can learn other RBs on the network and connection relationships between them. On the TRILL network, multiple RBs are included. According to different locations of the RBs distributed on the TRILL network, the RBs are classified into two types, that is a TOR switch and a center of rack (Center Of Rack in English, COR for short) switch. The TOR switch is connected to the COR switch via a link. When the link between the TOR and the COR is faulty, route convergence is performed by using the IS-IS to implement a service protection switchover.

In the process of implementing the present invention, the inventor finds at least the following problems in the prior art: When the route convergence is performed by using the IS-IS, the TOR switch or the COR switch that is connected to the faulty link needs to broadcast updated link information to all TOR switches or COR switches on the TRILL network. After that, according to obtained link information, a TOR or COR performs route calculation and selects a shortest path as a standby link. It needs to take several seconds to complete a service protection switchover. In this case, for some services that are very sensitive to delay, packet loss, and the like on the TRILL network, such as virtual manufacturing and voice over Internet Protocol (Voice over Internet Protocol in English, VoIP for short), a second-level service protection switchover causes interruption in a current service.

### SUMMARY

In view of the above, embodiments of the present invention provide a method, a TOR switch, and a system for implementing a protection switchover based on a TRILL network, so as to solve a problem in the prior art that the service protection switchover implemented by using an IS-IS to perform route convergence causes interruption in a service that is very sensitive to delay, packet loss, and the like.

According to a first aspect, an embodiment of the present invention provides a method for implementing a protection switchover based on a TRILL network, including: acquiring, by a TOR switch, protection group information by using the TRILL protocol, where the protection group information includes first link information of a connection between the TOR switch and a first center of rack COR switch and second link information of a connection between the TOR switch and a second COR switch; establishing, by the TOR switch, a first link with the first COR switch according to the first link information and a second link with the second COR switch according to the second link information; and switching, by the TOR switch, a service carried over the first link to the second link when the first link is a master link and if the first link is faulty.

In combination with the first aspect, in a first possible implementation manner, the acquiring, by a TOR switch, protection group information includes: acquiring, by the TOR switch, the pre-stored protection group information.

In combination with the first aspect, in a second possible implementation manner, the acquiring, by a TOR switch, protection group information includes: acquiring, by the TOR switch, information about two links as the protection group information from a link state database LSDB generated by using the TRILL protocol, where the two links are links connecting the TOR switch with the first COR switch and the second COR switch respectively.

In combination with the first aspect, the first possible implementation manner of the first aspect, or the second possible implementation manner of the first aspect, in a third possible implementation manner, the method further includes: establishing a bidirectional forwarding detection (Bidirectional Forwarding Detection in English, BFD for short) session between the TOR switch and the first COR switch; and confirming that the first link is faulty if the TOR switch does not receive a BFD detection packet sent by the first COR switch within a preset time segment.

In combination with the first aspect, the first possible implementation manner of the first aspect, or the second possible implementation manner of the first aspect, in a fourth possible implementation manner, the method further includes: switching, by the TOR switch, a service carried over the second link to the first link after a fault of the first link is rectified and if the second link is faulty.

In combination with the third possible implementation manner of the first aspect or the fourth possible implementation manner of the first aspect, in a fifth possible implementation manner, the method further includes: establishing a BFD session between the TOR switch and the second COR switch; and confirming that the second link is faulty if the TOR switch does not receive a BFD detection packet from the second COR switch within a preset time segment; and the switching, by the TOR switch, a service carried over the first link to the second link when the first link is a master link and if the first link is faulty includes: switching, by the TOR switch, the service carried over the first link to the second link if the first link is faulty and the BFD session between the TOR switch and the second COR switch is normal.

In combination with the first aspect or any one of the first to the fifth possible implementation manners of the first aspect, in a sixth possible implementation manner, the first link information includes a nickname of the first COR switch; and the second link information includes a nickname of the second COR switch.

In combination with the sixth possible implementation manner of the first aspect, in a seventh possible implementation manner, the first link information further includes route forwarding information from the TOR switch to the first COR switch if an indirectly connected network segment exists between the TOR switch and the first COR switch.

In combination with the sixth possible implementation manner of the first aspect or the seventh possible implementation manner of the first aspect, in an eighth possible implementation manner, the second link information further includes route forwarding information from the TOR switch to the second COR switch if an indirectly connected network segment exists between the TOR switch and the second COR switch.

According to a second aspect, an embodiment of the present invention provides a top of rack TOR switch, including: an acquiring unit, configured to acquire protection group information, where the protection group information includes first link information of a connection between the TOR switch and a first center of rack COR switch and second link information of a connection between the TOR switch and a second COR switch, and transmit the protection group information to a first establishing unit; the first establishing unit, configured to establish a first link with the first COR switch according to the first link information transmitted by the acquiring unit and establish a second link with the second COR switch according to the second link information transmitted by the acquiring unit; and a first switching unit, configured to switch a service carried over the first link to the second link when the first link is a master link and if the first link is faulty.

In combination with the second aspect, in a first possible implementation manner, the acquiring unit includes: a first acquiring unit, configured to acquire the pre-stored protection group information.

In combination with the second aspect, in a second possible implementation manner, the acquiring unit includes: a second acquiring module, configured to acquire information about two links as the protection group information from a link state database LSDB generated by using the TRILL protocol, where the two links are links connecting the TOR switch with the first COR switch and the second COR switch respectively.

In combination with the second aspect, the first possible implementation manner of the second aspect, or the second possible implementation manner of the second aspect, in a third possible implementation manner of the second aspect, the TOR switch further includes: a second establishing unit, configured to establish a BFD session with the first COR switch; and a first detecting unit, configured to confirm that the first link is faulty when the TOR switch does not receive a BFD detection packet sent by the first COR switch within a preset time segment.

In combination with the second aspect, the first possible implementation manner of the second aspect, or the second possible implementation manner of the second aspect, in an fourth possible implementation manner of the second aspect, the TOR switch further includes: a second switching unit, configured to switch a service carried over the second link to the first link after a fault of the first link is rectified and if the second link used by the first switching unit is faulty.

In combination with the third possible implementation manner of the second aspect or the fourth possible implementation manner of the second aspect, in a fifth possible implementation manner of the second aspect, the TOR switch further includes: a third establishing unit, configured to establish a BFD session with the second COR switch; and a second detecting unit, configured to confirm that the second link is faulty when the TOR switch does not receive a BFD detection packet sent by the second COR switch within a preset time segment; where the first switching unit is further configured to switch the service carried over the first link to the second link when the first link is faulty and the BFD session between the TOR switch and the second COR switch is normal.

In combination with the second aspect and any one of the first to the fifth possible implementation manners of the second aspect, in a sixth possible implementation manner of the second aspect, the first link information includes a nickname of the first COR switch; and the second link information includes a nickname of the second COR switch.

In combination with the sixth possible implementation manner of the second aspect, in a seventh possible implementation manner of the second aspect, the first link information further includes route forwarding information from the TOR switch to the first COR switch if an indirectly connected network segment exists between the TOR switch and the first COR switch.

In combination with the sixth possible implementation manner of the second aspect or the seventh possible implementation manner of the second aspect, in a eighth possible implementation manner, the second link information further includes route forwarding information from the TOR switch to the second COR switch if an indirectly connected network segment exists between the TOR switch and the second COR switch.

According to a third aspect, an embodiment of the present invention provides a system for implementing a protection switchover based on a TRILL network, including a top of rack TOR switch, a first center of rack COR switch, and a second center of rack COR switch.

In combination with the third aspect, in a first possible implementation manner, the TOR switch is configured to acquire protection group information by using the TRILL protocol, establish a first link with the first COR switch according to first link information in the protection group information, and establish a second link with the second COR switch according to second link information in the protection group information, where the protection group information includes the first link information of a connection between the TOR switch and the first COR switch and the second link information of a connection between the TOR switch and the second COR switch; and the TOR switch is further configured to switch a service carried over the first link to the second link when the first link is a master link and if the first link is faulty.

According to the method, the TOR switch, and the system for implementing a protection switchover based on a TRILL network that are provided in the embodiments of the present invention, the TOR switch acquires protection group information, where the protection group information includes first link information of a connection between the TOR switch and a first COR switch and second link information of a connection between the TOR switch and a second COR switch; the TOR switch establishes a first link with the first COR switch according to the first link information and establishes a second link with the second COR switch according to the second link information; and the TOR switch switches a service carried over the first link to the second link when the first link is a master link and if the first link is faulty. Compared with a method that route convergence is performed by using an IS-IS to obtain a standby link and a service running over a faulty link is switched to the standby link to complete a service protection switchover in the prior art, in the present invention, a known second link can be provided as a standby link and there is no need to perform route convergence by using the IS-IS to obtain a standby link, thereby accelerating a protection switchover speed.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for implementing a protection switchover based on a TRILL network according to Embodiment 1 of the present invention;
FIG. 2 is a schematic diagram of a link connection according to Embodiment 1 of the present invention;
FIG. 3 is a flowchart of a method for implementing a protection switchover based on a TRILL network according to Embodiment 2 of the present invention;
FIG. 4 is a flowchart of another method for implementing a protection switchover based on a TRILL network according to Embodiment 2 of the present invention;
FIG. 5 is a schematic structural diagram of a TOR switch according to Embodiment 3 of the present invention;
FIG. 6 is a schematic structural diagram of another TOR switch according to Embodiment 3 of the present invention; and
FIG. 7 is a schematic structural diagram of an apparatus for implementing a protection switchover based on a TRILL network according to Embodiment 3 of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

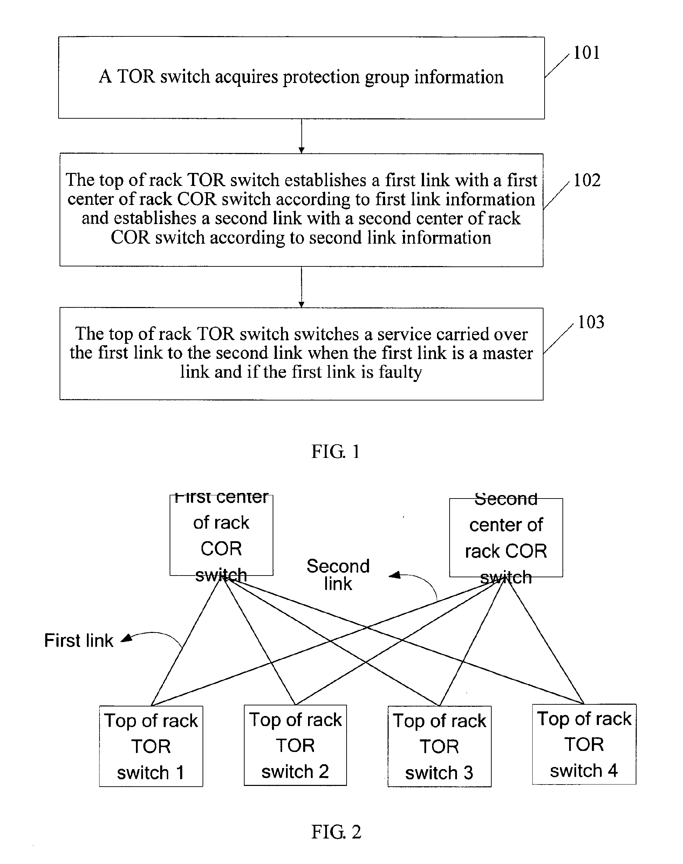

An embodiment of the present invention provides a method for implementing a protection switchover based on a TRILL network, as shown in FIG. 1, including: 101. A TOR switch acquires protection group information.

The protection group information may include first link information of a connection between the TOR switch and a first COR switch and second link information of a connection between the TOR switch and a second COR switch. The acquiring protection group information may be that the protection group information is stored on the TOR switch by static configuration and the TOR switch acquires the pre-stored protection group information, or may be that the TOR switch acquires information about two links as the protection group information from a link state database (Link State Database in English, LSDB for short) generated by using the TRILL protocol, where the two links are links connecting the TOR switch and different COR switches respectively, and the LSDB is a set of information about links between all TOR switches and all COR switches on the TRILL network and is generated by the TOR switch by using the TRILL protocol.

In this embodiment, the first link information may include a nickname of the first COR switch and the second link information may include a nickname of the second COR switch.

It should be noted that the first link information further includes route forwarding information from the TOR switch to the first COR switch if an indirectly connected network segment exists between the TOR switch and the first COR switch. Similarly, the second link information further includes route forwarding information from the TOR switch to the second COR switch if an indirectly connected network segment exists between the TOR switch and the second COR switch.

102. The TOR switch establishes a first link with the first COR switch according to the first link information and establishes a second link with the second COR switch according to the second link information.

The TOR switch obtains, from the LSDB, a path from the TOR switch to the first COR switch according to the nickname of the first COR switch in the first link information and uses the path as the first link. The TOR switch obtains, from the LSDB, a path from the TOR switch to the second COR switch according to the nickname of the second COR switch in the second link information and uses the path as the second link. The first link may include a first link identifier, where the first link identifier may be a master link identifier or a standby link identifier. The second link may include a second link identifier, where the second link identifier may be a master link identifier or a standby link identifier.

103. The TOR switch switches a service carried over the first link to the second link when the first link is a master link and if the first link is faulty.

In this embodiment, a master or standby state of the first link may be determined by using the first link identifier of the first link, and when the first link identifier is the master link identifier, it is indicated that the first link is a master link. After the first link and the second link are established, a fault detection mechanism may be separately set for both the first link and the second link. In this embodiment, the fault detection mechanism may be an interface interruption mechanism or a bidirectional forwarding detection (Bidirectional Forwarding Detection in English, BFD) mechanism. A service carried over the TOR switch is performed over the first link. When the fault detection mechanism detects that the first link is faulty, the TOR switch switches the service carried over the first link to the second link.

For example, as shown in FIG. 2, the TOR switch is connected to the first COR switch by using the first link, the first link is a master link, the TOR switch is connected to the second COR switch by using the second link, and the second link is a standby link. When the first link is faulty, the service that needs to be carried by using the first link may be carried by using the second link directly.

When the first link is a master link and if the first link is detected to be faulty according to the BFD detection protocol used between the TOR switch and the first COR switch, the switching, by the TOR switch, the service carried over the first link to the second link specifically includes:
switching, by the TOR switch, the service carried over the first link to the second link when the first link is the master link and if the first link is faulty and the second link works normally.

It should be noted that multiple TOR switches and multiple COR switches exist on the TRILL network. This embodiment only uses one of the TOR switches and two COR switches (that is the first COR switch and the second COR switch) as an example to describe the method for implementing a protection switchover based on a TRILL network. For other TOR switches and COR switches, the method for implementing a protection switchover based on a TRILL network that is described in this embodiment may be used to perform a service protection switchover.

According to the method for implementing a protection switchover based on a TRILL network that is provided in this embodiment of the present invention, a top of rack TOR switch acquires protection group information by using the TRILL protocol, where the protection group information includes first link information of a connection between the TOR switch and a first center of rack COR switch and second link information of a connection between the TOR switch and a second COR switch; the TOR switch establishes a first link with the first COR switch according to the first link information and establishes a second link with the second COR switch according to the second link information; and the TOR switch switches a service carried over the first link to the second link when the first link is a master link and if the first link is faulty. Compared with a method that route convergence is performed by using an IS-IS to obtain a standby link and a service running over a faulty link is switched to the standby link to complete a service protection switchover in the prior art, in this embodiment, a known second link can be provided as a standby link and there is no need to perform route convergence by using the IS-IS to obtain a standby link, thereby accelerating a protection switchover speed.

### Embodiment 2

An embodiment of the present invention provides a method for implementing a protection switchover based on a TRILL network, and this method is applied in the TRILL network. As shown in FIG. 2, the TRILL network includes multiple TOR switches and multiple COR switches, where each TOR switch separately and physically is connected to the COR switches. The TRILL protocol is used on the TRILL network, where the TRILL protocol includes protocol specifications of a data plane and protocol specifications of a control plane. In the protocol specifications of the control plane, an IS-IS is introduced into TRILL as an addressing protocol that runs between all TOR switches and COR switches on the TRILL network. The IS-IS is a routing protocol based on a link state. On the TRILL network, each TOR switch generates a link state protocol data unit (Link State Protocol Data Unit in English, LSPDU for short), where the LSPDU includes all link information of the TOR switch that generates the LSPDU. Each TOR switch collects LSPDUs of all COR switches connected to the TOR switch to generate an LSDB of its own, where the LSDB includes link information of all TOR switches and COR switches on the TRILL network.

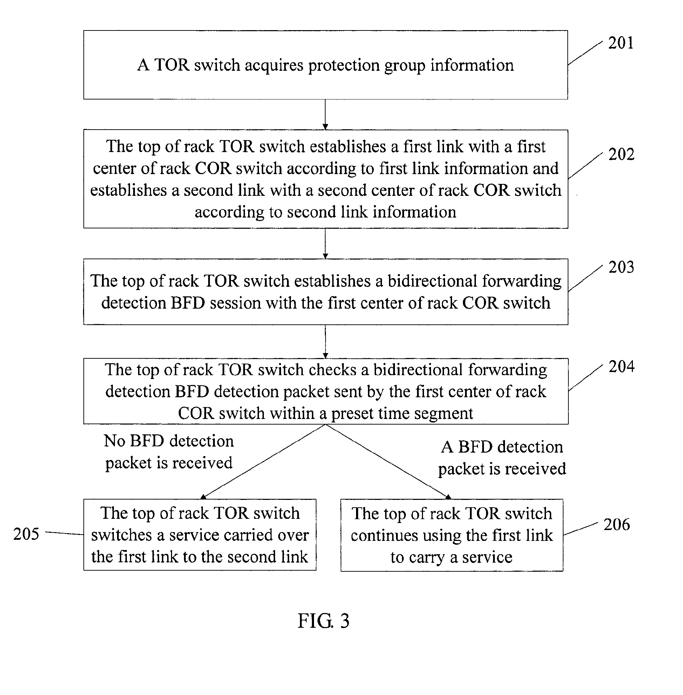

As shown in FIG. 3, the method for implementing a protection switchover based on a TRILL network that is provided in this embodiment of the present invention includes:
201. A TOR switch acquires protection group information.

The acquiring protection group information is the same as that described in step 101 in Embodiment 1 and is not repeated herein.

In this embodiment, the first link information may include a nickname of the first COR switch and the second link information may include a nickname of a second COR switch.

202. The TOR switch establishes a first link with the first COR switch according to the first link information and establishes a second link with the second COR switch according to the second link information.

The TOR switch obtains, from the LSDB, a path from the TOR switch to the first COR switch according to the nickname of the first COR switch in the first link information and uses the path as the first link. The TOR switch obtains, from the LSDB, a path from the TOR switch to the second COR switch according to the nickname of the second COR switch in the second link information and uses the path as the second link. The first link includes a first link identifier, where the first link identifier may be a master link identifier or a standby link identifier. The second link includes a second link identifier, where the second link identifier may be a master link identifier or a standby link identifier.

203. The TOR switch establishes a BFD session with the first COR switch.

It should be noted that the BFD protocol needs to be separately configured on the TOR switch and the first COR switch before the BFD session is established between the TOR switch and the first COR switch. The configuring the BFD protocol may be that the BFD protocol is manually and separately configured on the TOR switch and the first COR switch by using a program. After the BFD protocol is separately configured on the TOR and the first COR switch, the BFD session is established between the TOR switch and the first COR switch according to the BFD protocol and used to detect a state of a link between the TOR switch and the first COR switch. This embodiment uses the TOR switch that functions as an initiator establishing the BFD session as an example for detailed description. A process that the BFD session is established between the TOR switch and the first COR switch is as follows: The TOR switch establishes the BFD session with the first COR switch according to the obtained first link information. It should be noted that the first link information includes the nickname of the first COR switch and if an indirectly connected network segment exists between the TOR switch and the first COR switch, the first link information further includes route forwarding information from the TOR switch to the first COR switch.

The TOR switch sends a BFD control packet to the first COR switch according to the nickname of the first COR switch. When the TOR switch receives a BFD control packet returned by the first COR switch, establishment of the BFD session is complete. Before the establishment of the BFD session is complete, the TOR switch periodically sends a BFD detection packet at an interval specified by the BFD protocol. After the BFD session is established, the interval for sending the BFD detection packet and detection time are negotiated and determined by exchanging BFD control packets.

204. The TOR switch checks a BFD detection packet sent by the first COR switch within a preset time segment. If the TOR switch does not receive the BFD detection packet sent by the first COR switch within the preset time segment, step 205 is performed; if the TOR switch receives the BFD detection packet sent by the first COR switch within the preset time segment, step 206 is performed.

The TOR switch and the first COR switch negotiate a packet sending time and a packet detection time by sending control packets to each other. The obtained packet detection time is the preset time segment. The TOR switch periodically sends the BFD detection packet to the first COR switch according to a sending time negotiated by using the BFD control packets. The first COR switch periodically sends the BFD detection packet to the TOR switch according to the sending time negotiated by using the BFD control packets. The TOR switch checks whether the BFD detection packet sent by the first COR switch is received within the preset time segment. If the TOR switch does not receive the BFD detection packet sent by the first COR switch within the preset time segment, the BFD protocol on a TOR end notifies an upper-layer IS-IS that the first link is faulty and the TOR switch cannot use the first link to continue sending a service. If the TOR switch receives the BFD detection packet sent by the first COR switch within the preset time segment, the BFD protocol on the TOR end notifies the upper-layer IS-IS that the first link is normal and the TOR switch may use the first link to continue sending a service.

205. The TOR switch switches a service carried over the first link to the second link.

When the first link is faulty, the IS-IS marks the first link as a faulty link after receiving faulty information about the first link. A first link identifier is checked by using the LSDB of the TOR switch. If the first link identifier is a master identifier, it is learned that the first link is set with a protection link. Then, a standby link of the first link, that is the second link, is obtained by using the LSDB of the TOR switch and the service carried over the first link needs to be sent over the second link.

206. The TOR switch continues using the first link to carry a service.

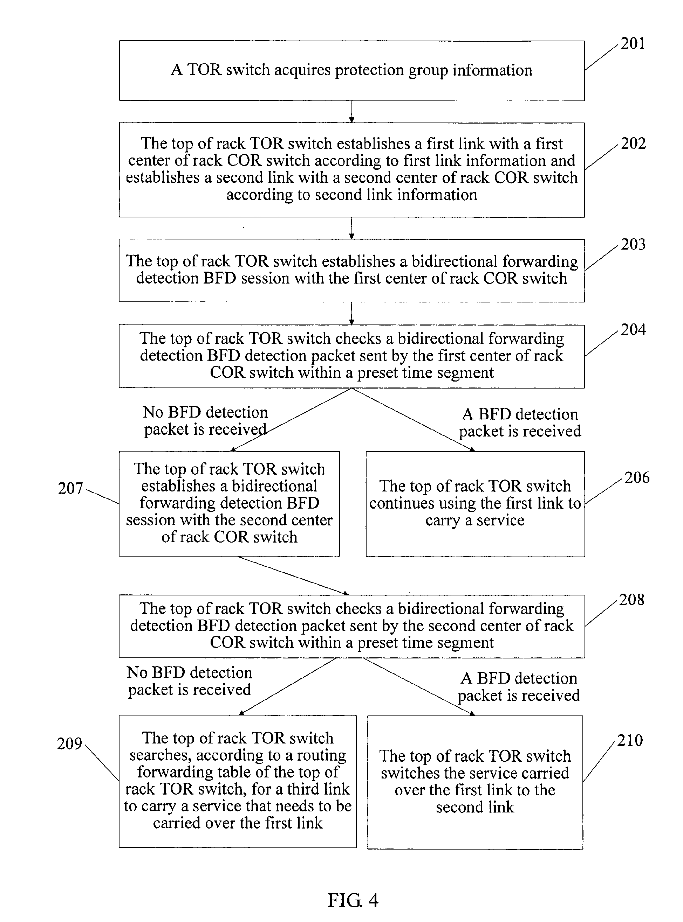

Further, in another application scenario of the present invention, as shown in FIG. 4, to ensure service transmission reliability after a service switchover, a fault detection may be performed on the second link before the TOR switch switches the service carried over the first link to the second link, and then the service that needs to be carried over the first link is sent over the second link. Detailed steps are described from 207 to 210.

207. The TOR switch establishes a BFD session with the second COR switch.

For a method for establishing the BFD session between the TOR switch and the second COR switch, reference may be made to description in step 203 in this embodiment, and details are not repeated herein.

208. The TOR switch checks a BFD detection packet sent by the second COR switch within a preset time segment. If the TOR switch does not receive the BFD detection packet sent by the second COR switch within the preset time segment, the second link is determined to be faulty and step 209 is performed. If the TOR switch receives the BFD detection packet sent by the second COR switch within the preset time segment, the second link is determined to be normal and step 210 is performed.

For a method for checking, by the TOR switch, the BFD detection packet sent by the second COR switch within the preset time segment, reference may be made to description in step 204 in this embodiment, and details are not repeated herein.

209. The TOR switch searches, according to a routing forwarding table of the TOR switch, for a third link to send the service that needs to be carried over the first link.

When the second link is faulty, by performing route convergence, the TOR switch searches for the third link that can be used to send the service that needs to be carried over the first link. If no link that is capable of sending the service that needs to be carried over the first link is found, the TOR switch waits until a fault of the first link or the second link is rectified and sends the service that needs to be carried over the first link by using the first link or the second link after the fault of the first link or the second link is rectified.

210. The TOR switch switches the service carried over the first link to the second link.

For a method for switching, by the TOR switch, the service carried over the first link to the second link, reference may be made to description in step 205 in this embodiment, and details are not repeated herein.

It should be noted that this embodiment uses the TOR switch as an initiator establishing the first link, the second link, and the BFD session to describe the method for implementing a protection switchover based on a TRILL network. The initiator establishing the first link, the second link, and the BFD session may also be the first COR switch or the second COR switch.

It should also be noted that this embodiment uses the first link between the TOR switch and the first COR switch and the second link between the TOR switch and the second COR switch as examples to perform the method for implementing a protection switchover based on a TRILL network. On an actual TRILL network, a large number of TOR switches, first COR switches, and second COR switches are included, and multiple first links and second links may be set on the TRILL network. For a detailed setting method, refer to Embodiment 1 or 2, and details are not repeated in this embodiment.

According to a method provided in this embodiment of the present invention for implementing a protection switchover based on a TRILL network, a top of rack TOR switch acquires protection group information, where the protection group information includes first link information of a connection between the TOR switch and a first center of rack COR switch and second link information of a connection between the TOR switch and a second COR switch; the TOR switch establishes a first link with the first COR switch according to the first link information and establishes a second link with the second COR switch according to the second link information; and the TOR switch switches a service carried over the first link to the second link when the first link is a master link and if the first link is faulty. Compared with a method that route convergence is performed by using an IS-IS to obtain a standby link and a service running over a faulty link is switched to the standby link to complete a service protection switchover in the prior art, in this embodiment, a known second link can be provided as a standby link and there is no need to perform route convergence by using the IS-IS to obtain a standby link, thereby accelerating a protection switchover speed. This solves a problem in the prior art that the service protection switchover implemented by using an IS-IS to perform route convergence causes interruption in a service that is very sensitive to delay, packet loss, and the like.

In addition, when a fault of the first link is rectified and if the second link is faulty, the TOR switch can switch a service carried over the second link to the first link to further ensure reliability of a link switchover. By using a fast BFD detection mechanism to detect a link fault, fault detection time may be controlled in millisecond level. This further accelerates a service protection switchover speed and better solves the problem in the prior art that the service protection switchover implemented by using an IS-IS to perform route convergence causes interruption in a service that is very sensitive to delay, packet loss, and the like.

### Embodiment 3

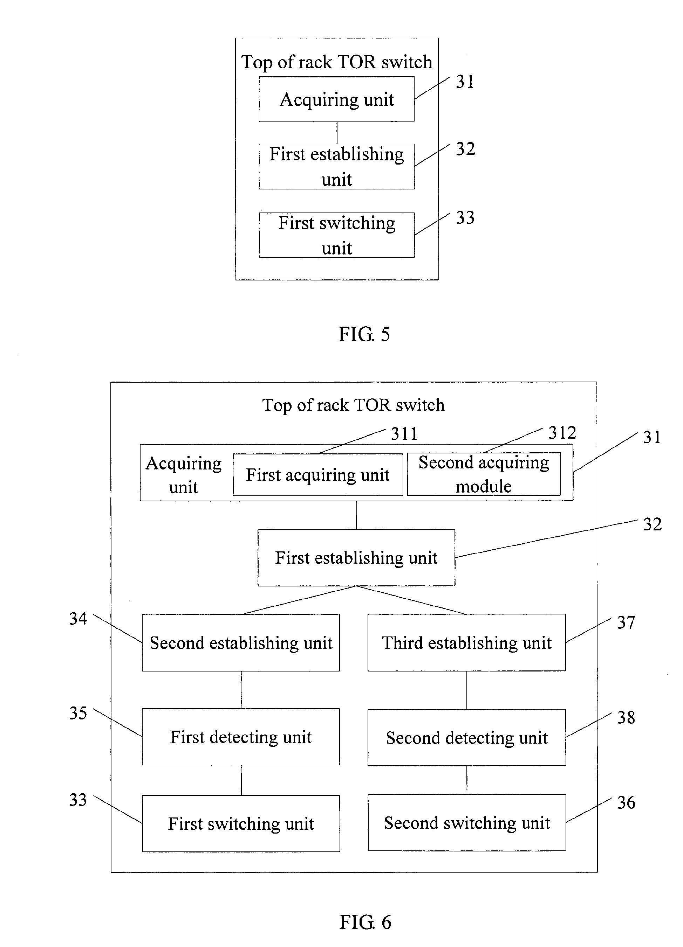

An embodiment of the present invention provides a top of rack switch TOR switch, as shown in FIG. 5, including: an acquiring unit 31, a first establishing unit 32, and a first switching unit 33.

The acquiring unit 31 is configured to acquire protection group information, where the protection group information includes first link information of a connection between the TOR switch and a first center of rack COR switch and second link information of a connection between the TOR switch and a second COR switch, and transmit the protection group information to the first establishing unit 32. A detailed implementation manner is the same as step 201 described in FIG. 3 and is not repeated herein.

The first link information includes a nickname of the first COR switch and the second link information includes a nickname of the second COR switch. The first link information further includes route forwarding information from the TOR switch to the first COR switch if an indirectly connected network segment exists between the TOR switch and the first COR switch. The second link information further includes route forwarding information from the TOR switch to the second COR switch if an indirectly connected network segment exists between the TOR switch and the second COR switch.

The first establishing unit 32 is configured to establish a first link with the first COR switch according to the first link information transmitted by the acquiring unit 31 and establish a second link with the second COR switch according to the second link information transmitted by the acquiring unit. A detailed implementation manner is the same as step 202 described in FIG. 3 and is not repeated herein.

The first switching unit 33 is configured to switch a service carried over the first link to the second link when the first link is a master link and if the first link is faulty. A detailed implementation manner is the same as steps 203-205 described in FIG. 3 and is not repeated herein.

Further, as shown in FIG. 6, on the basis of FIG. 5, the acquiring unit 31 includes a first acquiring module 311.

The first acquiring module 311 is configured to acquire the pre-stored protection group information.

Further, as shown in FIG. 6, the acquiring unit 31 includes a second acquiring module 312.

The second acquiring module 312 is configured to acquire information about two links as the protection group information from a link state database LSDB generated by using the TRILL protocol, where the two links are links connecting the TOR switch and different COR switches respectively.

Further, as shown in FIG. 6, the TOR switch further includes a second establishing unit 34 and a first detecting unit 35.

The second establishing unit 34 is configured to establish a bidirectional forwarding detection BFD session with the first COR switch. A detailed implementation manner is the same as step 203 described in FIG. 3 and is not repeated herein.

The first detecting unit 35 is configured to confirm that the first link is faulty when the TOR switch does not receive a BFD detection packet sent by the first COR switch within a preset time segment. A detailed implementation manner is the same as step 204 described in FIG. 3 and is not repeated herein.

Further, as shown in FIG. 6, the TOR switch further includes a second switching unit 36.

The second switching unit 36 is configured to switch a service carried over the second link to the first link after a fault of the first link is rectified and if the second link used by the first switching unit is faulty. A detailed implementation manner is the same as step 209 described in FIG. 3 and is not repeated herein.

Further, as shown in FIG. 6, the TOR switch further includes:
a third establishing unit 37, configured to establish a BFD session with the second COR switch, where a detailed implementation manner is the same as step 207 described in FIG. 3and is not repeated herein; and
a second detecting unit 38, configured to confirm that the second link is faulty when the TOR switch does not receive a BFD detection packet sent by the second COR switch within a preset time segment, where a detailed implementation manner is the same as step 208 described in FIG. 3 and is not repeated herein.

The first switching unit is further configured to switch the service carried over the first link to the second link when the first link is faulty and the BFD session between the TOR switch and the second COR switch is normal. A detailed implementation manner is the same as step 210 described in FIG. 3 and is not repeated herein.

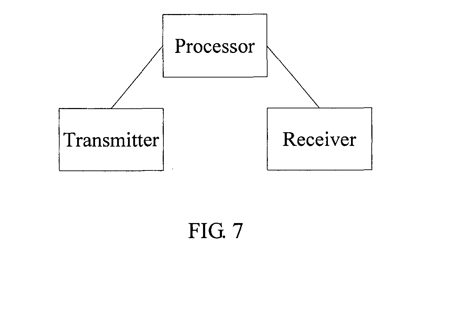

This embodiment of the present invention further provides an apparatus for implementing a protection switchover based on a TRILL network, which is configured to implement the forgoing method embodiments. As shown in FIG. 7, the apparatus includes a transmitter, a processor, and a receiver.

The processor is configured to: acquire protection group information by using the TRILL protocol, where the protection group information includes the first link information of the connection between the TOR switch and the first center of rack COR switch and the second link information of the connection between the TOR switch and the second COR switch; establish the first link and the second link according to the protection group information; switch the service carried over the first link to the second link when the first link is a master link and if the first link is faulty; and switch the service carried over the second link to the first link when the fault of the first link is rectified and if the second link is faulty.

The processor is further configured to generate a BFD control packet and sends the BFD control packet to the transmitter.

The transmitter is configured to send the BFD control packet generated by the processor to the first COR switch and the second COR switch, where the BFD control packet sent to the first COR switch and the BFD control packet sent to the second COR switch may be the same or may be different.

The receiver is configured to receive BFD control packets sent by the first COR switch and the second COR switch and send the processor the BFD control packets sent by the first COR switch and the second COR switch.

The processor is further configured to establish bidirectional forwarding detection BFD sessions with the first COR switch and the second COR switch.

The processor is further configured to generate a BFD detection packet and send the BFD detection packer to the transmitter.

The transmitter is further configured to send the BFD detection packet to the first COR switch and the second COR switch according to packet sending time negotiated by using the BFD control packets. An interval for sending the BFD detection packet to the first COR switch and an interval for sending the BFD detection packet to the second COR switch may be the same or may be different.

The receiver is further configured to receive BFD detection packets sent by the first COR switch and the second COR switch.

The processor is further configured to detect whether the receiver receives the BFD detection packet sent by the first COR switch or the BFD detection packet sent by the second COR switch within the preset time segment, set the first link to a faulty link if no BFD detection packet sent by the first COR switch is received, set the second link to a faulty link if no BFD detection packet sent by the second COR switch is received, and switch the service carried over the first link to the second link when the first link is faulty and the second link is not faulty.

According to a TOR switch and an apparatus provided in this embodiment of the present invention, a TOR switch acquires protection group information by using the TRILL protocol, where the protection group information includes first link information of a connection between the TOR switch and a first center of rack COR switch and second link information of a connection between the TOR switch and a second COR switch; the TOR switch establishes a first link with the first COR switch according to the first link information and establishes a second link with the second COR switch according to the second link information; and the TOR switch switches a service carried over the first link to the second link when the first link is a master link and if the first link is faulty. Compared with a method that route convergence is performed by using an IS-IS to obtain a standby link and a service running over a faulty link is switched to the standby link to complete a service protection switchover in the prior art, in this embodiment, a known second link can be provided as a standby link and there is no need to perform route convergence by using the IS-IS to obtain a standby link, thereby accelerating a protection switchover speed. This solves a problem in the prior art that the service protection switchover implemented by using an IS-IS to perform route convergence causes interruption in a service that is very sensitive to delay, packet loss, and the like.

In addition, when a fault of the first link is rectified and if the second link is faulty, the TOR switch can switch a service carried over the second link to the first link to further ensure reliability of a link switchover. By using a fast BFD detection mechanism to detect a link fault, fault detection time may be controlled in millisecond level. This further accelerates a service protection switchover speed and better solves the problem in the prior art that the service protection switchover implemented by using an IS-IS to perform route convergence causes interruption in a service that is very sensitive to delay, packet loss, and the like.

### Embodiment 4

An embodiment of the present invention further provides a system for implementing a protection switchover based on a TRILL network, which is used to implement the forgoing methods in the present invention. Referring to a structure shown in FIG. 2, the system may include a TOR switch, a first COR switch, and a second COR switch.

The TOR switch is configured to acquire protection group information by using the TRILL protocol, establish a first link with the first COR switch according to first link information in the protection group information, and establish a second link with the second COR switch according to second link information in the protection group information, where the protection group information includes the first link information of a connection between the TOR switch and the first COR switch and the second link information of a connection between the TOR switch and the second COR switch.

The TOR switch is further configured to switch a service carried over the first link to the second link when the first link is a master link and if the first link is faulty.

According to a system for implementing a protection switchover based on a TRILL network provided in this embodiment of the present invention, a TOR switch acquires protection group information, where the protection group information includes first link information of a connection between the TOR switch and a first center of rack COR switch and second link information of a connection between the TOR switch and a second COR switch; the TOR switch establishes a first link with the first COR switch according to the first link information and establishes a second link with the second COR switch according to the second link information; and the TOR switch switches a service carried over the first link to the second link when the first link is a master link and if the first link is faulty. Compared with a method that route convergence is performed by using an IS-IS to obtain a standby link and a service running over a faulty link is switched to the standby link to complete a service protection switchover in the prior art, in this embodiment, a known second link can be provided as a standby link and there is no need to perform route convergence by using the IS-IS to obtain a standby link, thereby accelerating a protection switchover speed. This solves a problem in the prior art that the service protection switchover implemented by using an IS-IS to perform route convergence causes interruption in a service that is very sensitive to delay, packet loss, and the like.

In addition, when a fault of the first link is rectified and if the second link is faulty, the TOR switch can switch a service carried over the second link to the first link to further ensure reliability of a link switchover. By using a fast BFD detection mechanism to detect a link fault, fault detection time may be controlled in millisecond level. This further accelerates a service protection switchover speed and better solves the problem in the prior art that the service protection switchover implemented by using an IS-IS to perform route convergence causes interruption in a service that is very sensitive to delay, packet loss, and the like.

Through the foregoing description of the embodiments, it is clear to persons skilled in the art that the present invention may be implemented by software plus necessary universal hardware, and definitely may also be implemented by hardware, but in many cases, the software implementation is preferred. Based on such an understanding, the technical solutions of the present invention essentially, or the part contributing to the prior art may be implemented in the form of a software product. The computer software product is stored in a readable storage medium, for example, a floppy disk, a hard disk, or an optical disk of the computer, and includes several instructions for instructing a computer device (which may be a personal computer, a server, or a network device or the like) to perform the methods described in the embodiments of the present invention.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for implementing a protection switchover based on a transparent interconnection of lots of links, TRILL, network, comprising:
acquiring, by a top of rack, TOR, switch, protection group information, wherein the protection group information comprises first link information of a connection between the TOR switch and a first center of rack, COR, switch and second link information of a connection between the TOR switch and a second COR switch;
establishing, by the TOR switch, a first link with the first COR switch according to the first link information and a second link with a second COR switch according to the second link information; and
switching, by the TOR switch, a service carried over the first link to the second link when the first link is a master link and if the first link is faulty.

2. The method according to claim 1, wherein the acquiring, by a TOR switch, protection group information comprises:
acquiring, by the TOR switch, the pre-stored protection group information; or
acquiring, by the TOR switch, information about two links as the protection group information from a link state database, LSDB, generated by using the TRILL protocol, wherein the two links are links connecting the TOR switch with the first COR switch and the second COR switch respectively.

3. The method according to claim 1 or 2, further comprising:
establishing, by the TOR switch, a bidirectional forwarding detection, BFD, session with the first COR switch; and
confirming that the first link is faulty if the TOR switch does not receive a BFD detection packet sent by the first COR switch within a preset time segment.

4. The method according to claim 1 or 2, further comprising:
switching, by the TOR switch, a service carried over the second link to the first link when a fault of the first link is rectified and if the second link is faulty.

5. The method according to claim 3 or 4, further comprising:
establishing, by the TOR switch, a BFD session with the second COR switch; and
confirming that the second link is faulty if the TOR switch does not receive a BFD detection packet sent by the second COR switch within a preset time segment; wherein:
the switching, by the TOR switch, a service carried over the first link to the second link if the first link is faulty comprises:
switching, by the TOR switch, the service carried over the first link to the second link if the first link is faulty and the BFD session between the TOR switch and the second COR switch is normal.

6. The method according to any one of claims 1-5, wherein the first link information comprises a nickname of the first COR switch and the second link information comprises a nickname of the second COR switch.

7. The method according to claim 6, wherein:
the first link information further comprises route forwarding information from the TOR switch to the first COR switch if an indirectly connected network segment exists between the TOR switch and the first COR switch; and/or
the second link information further comprises route forwarding information from the TOR switch to the second COR switch if an indirectly connected network segment exists between the TOR switch and the second COR switch.

8. A top of rack, TOR, switch, applied in a transparent interconnection of lots of links, TRILL, network and comprising:
an acquiring unit, configured to acquire protection group information, wherein the protection group information comprises first link information of a connection between the TOR switch and a first center of rack, COR, switch and second link information of a connection between the TOR switch and a second COR switch, and transmit the protection group information to a first establishing unit;
the first establishing unit, configured to establish a first link with the first COR switch according to the first link information transmitted by the acquiring unit and establish a second link with the second COR switch according to the second link information transmitted by the acquiring unit; and
a first switching unit, configured to switch a service carried over the first link to the second link when the first link is a master link and if the first link is faulty.

9. The TOR switch according to claim 8, wherein the acquiring unit comprises:
a first acquiring module, configured to acquire the pre-stored protection group information; or
1a second acquiring module, configured to acquire information about two links as the protection group information from a link state database, LSDB, generated by using the TRILL protocol, wherein the two links are links connecting the TOR switch with the first COR switch and the second COR switch respectively.

10. The TOR switch according to claim 8 or 9, further comprising:
a second establishing unit, configured to establish a bidirectional forwarding detection, BFD, session with the first COR switch; and
a first detecting unit, configured to confirm that the first link is faulty when the TOR switch does not receive a BFD detection packet sent by the first COR switch within a preset time segment.

11. The TOR switch according to claim 8 or 9, further comprising:
a second switching unit, configured to switch a service carried over the second link to the first link after a fault of the first link is rectified and if the second link used by the first switching unit is faulty.

12. The TOR switch according to claim 10 or 11, further comprising:
a third establishing unit, configured to establish a BFD session with the second COR switch; and
a second detecting unit, configured to confirm that the second link is faulty when the TOR switch does not receive a BFD detection packet sent by the second COR switch within a preset time segment; wherein:
the first switching unit is further configured to switch the service carried over the first link to the second link when the first link is faulty and the BFD session between the TOR switch and the second COR switch is normal.

13. The TOR switch according to any one of claims 8-12, wherein the first link information comprises a nickname of the first COR switch and the second link information comprises a nickname of the second COR switch.

14. The TOR switch according to claim 13, wherein:
the first link information further comprises route forwarding information from the TOR switch to the first COR switch if an indirectly connected network segment exists between the TOR switch and the first COR switch; and/or
the second link information further comprises route forwarding information from the TOR switch to the second COR switch if an indirectly connected network segment exists between the TOR switch and the second COR switch.

15. A system for implementing a protection switchover based on a transparent interconnection of lots of links, TRILL, network, comprising a top of rack TOR switch, a first center of rack COR switch, and a second center of rack COR switch,
wherein the TOR switch is the TOR switch according to any one of claims 8-14.
